(19) **Europäisches Patentamt / European Patent Office / Office européen des brevets**

(11) **EP 3 274 962 B1**

(12) **EUROPÄISCHE PATENTSCHRIFT**

(45) Veröffentlichungstag und Bekanntmachung des Hinweises auf die Patenterteilung:
**06.03.2019 Patentblatt 2019/10**

(21) Anmeldenummer: **17704389.0**

(22) Anmeldetag: **03.02.2017**

(51) Int Cl.:
**G06T 11/00** (2006.01)      **G01N 23/046** (2018.01)
**G06T 7/73** (2017.01)

(86) Internationale Anmeldenummer:
**PCT/EP2017/000141**

(87) Internationale Veröffentlichungsnummer:
**WO 2017/133847 (10.08.2017 Gazette 2017/32)**

(54) **VERFAHREN ZUR REKONSTRUKTION EINES PRÜFTEILS BEI EINEM RÖNTGEN-CT-VERFAHREN IN EINER RÖNTGEN-CT-ANLAGE MITTELS EINER INTELLIGENTEN BAHNKURVE**

METHOD FOR THE RECONSTRUCTION OF A TEST PART IN AN X-RAY CT METHOD IN AN X-RAY CT SYSTEM BY MEANS OF AN INTELLIGENT PATH CURVE

PROCÉDÉ DE RECONSTRUCTION D'UN ÉLÉMENT DE TEST LORS D'UN PROCÉDÉ DE TOMOGRAPHIE À RAYONS X DANS UN SYSTÈME DE TOMOGRAPHIE À RAYONS X AU MOYEN D'UNE TRAJECTOIRE INTELLIGENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2016 DE 102016001247**

(43) Veröffentlichungstag der Anmeldung:
**31.01.2018 Patentblatt 2018/05**

(73) Patentinhaber: **YXLON International GmbH 22419 Hamburg (DE)**

(72) Erfinder:
- **HEROLD, Frank 22926 Ahrensburg (DE)**
- **KLEIN, Philipp 22335 Hamburg (DE)**
- **RAHMANI, Sarajaddin 22119 Hamburg (DE)**

(74) Vertreter: **DTS Patent- und Rechtsanwälte Schnekenbühl und Partner mbB Marstallstrasse 8 80539 München (DE)**

(56) Entgegenhaltungen:
**DE-A1-102012 013 500**

- **Andreas Fischer ET AL: "CT Rekonstruktion mit Objektspezifischen Erweiterten Trajektorien", DACH-Jahrestagung 2015, 10. Mai 2015 (2015-05-10), XP055362919, Salzburg, Austria Gefunden im Internet: URL:http://www.ndt.net/?id=18982 [gefunden am 2017-04-07]**
- **FABIAN STOPP ET AL: "A Geometric Calibration Method for an Open Cone-Beam CT System", 12TH INTERNATIONAL MEETING ON FULLY 3D IMAGE RECONSTRUCTION, 16. Juni 2013 (2013-06-16), Seiten 106-109, XP055361289, Lake Tahoe, California**
- **Philipp Klein ET AL: "Comparison of Reconstruction Methods for Computed Tomography with Industrial Robots using Automatic Object Position Recognition", 19th World Conference on Non-Destructive Testing 2016, 13. Juni 2016 (2016-06-13), Seiten 1-8, XP055361119, Gefunden im Internet: URL:http://www.ndt.net/article/wcndt2016/papers/mo1c2.pdf [gefunden am 2017-04-03]**

**Beschreibung**

Die Erfindung befasst sich mit einem Verfahren zur Rekonstruktion eines Prüfteils bei einem Röntgen-CT-Verfahren in einem Röntgen-CT-System, das eine Röntgenquelle mit Fokus, einen Röntgendetektor und einen Manipulator, der das Prüfteil innerhalb des Röntgen-CT-Systems bewegt, aufweist, wobei zur Generierung von Aufnahmen des Prüfteils in verschiedenen Positionen der Manipulator eine vorgebbare Bahnkurve abfährt und an getriggerten Positionen die Aufnahmen macht.

Verfahren zur dreidimensionalen Rekonstruktion von Prüfteilen unter Berücksichtigung einer bestimmten Projektionsgeometrie aus Projektionen sind aus dem Bereich der Computertomographie bekannt.

Die Projektionen müssen aus verschiedenen Projektionsrichtungen aufgenommen werden. Je nachdem, wie vollständig das Objekt entlang der sogenannten Bahnkurve im Sinne des Tuy-Smith Theorems (TST) abgebildet wurde, desto detaillierter ist die Abbildung des rekonstruierten Volumens.

Zur dreidimensionalen Rekonstruktion eines röntgentransparenten Prüfobjektes aus Projektionen unterschiedlicher Projektionsrichtungen in einem Röntgen-CT-System ist eine exakte Kenntnis der Projektionsgeometrie erforderlich. Im Sinne der Röntgen-Bildgebung beschreibt die Projektionsgeometrie die relative Lage des Prüfobjekts zum Fokus der Röntgenquelle und dem Röntgendetektor. Zur Überprüfung der tatsächlichen Projektionsgeometrie in jeder Projektion müssen markante Punkte des Prüfobjekts in Projektionen unterschiedlicher Projektionsrichtungen exakt wiedergefunden werden. Bei transparenten Prüfobjekten können diese Punkte durch unbekannte Objektstrukturen überlagert werden, so dass im schlimmsten Fall die Punkte gar nicht erkannt werden beziehungsweise deren Position nicht fehlerfrei bestimmbar ist. Die präzise Bestimmung der jeweiligen Projektionsgeometrie jeder Abbildung ist aus dem Stand der Technik bekannt; hierfür werden Marker verwendet.

Andreas Fischer et al.: "CT Rekonstruktion mit Objektspezifischen Erweiterten Trajektorien", DACH-Jahrestagung 2015, 10. Mai 2015, Salzburg, Austria, online unter: http://www.ndt.net/?id=18982, offenbart ein CT Verfahren, welches die Bildqualität im Rekonstruktionsvolumen verbessert, indem die Aufnahme-Trajektorie optimiert wird. Vorwissen über das Objekt, z.B. in Form von CAD-Daten, wird verwendet, um wertvolle Projektionen und daraus folgend eine objektspezifische, optimale Trajektorie zu bestimmen.

Aufgabe der Erfindung ist es, ein Verfahren bereitzustellen, bei dem zur Rekonstruktion eines Prüfteils eine Optimierung der Bahnkurve erfolgt, auf der das Prüfteil mittels eines Manipulators innerhalb des Röntgen-CT-Systems bewegt wird.

Die Aufgabe wird durch ein Verfahren mit den Merkmalen des Patentanspruchs 1 gelöst. Die Qualität des rekonstruierten Volumens wird verbessert, indem eine parametrisierbare Bahnkurve gewählt und diese intelligent bezüglich der Orientierung des Objekts variiert wird, um die Materialdurchstrahlbarkeit zu optimieren. Die Variation bzw. das Abfahren dieser intelligenten Bahnkurve erfordert mindestens einen variablen Parameter, der die Orientierung des Prüfteils mit Hilfe des Manipulators verändert. Erfindungsgemäß fährt der Manipulator zur Generierung von Aufnahmen des Prüfteils in verschiedenen Positionen eine vorgebbare Bahnkurve ab. An getriggerten Positionen wird jeweils eine Aufnahmen des Prüfteils gemacht. Die fraglichen Positionen können vorab festgelegt werden. Für jede dieser Aufnahmen wird die Position des Manipulators bestimmt und daraus die jeweilige zugehörige Projektionsgeometrie berechnet. Danach wird für diese Bahnkurve ein Wert einer Gütefunktion berechnet und danach wird eine weitere Bahnkurve durchfahren, die zu der vorangegangenen Bahnkurve unterschiedliche Parameter aufweist. Währenddessen werden weitere Aufnahmen des Prüfteils an den getriggerten Positionen erstellt und hierfür wiederum der Wert der Gütefunktion berechnet. Dieser zuletzt genannte Schritt wird wiederholt. Iterativ wird die Bahnkurve (in Bezug auf das unter Umständen bewegte Prüfteil) mittels eines Optimierungsalgorithmus ermittelt, bei der der Wert der Gütefunktion minimal ist. Im Anschluss daran werden weitere, zum genannten Prüfteil gleiche Prüfteile so geprüft, dass die vorher als optimal ermittelte Bahnkurve abgefahren wird. Am Ende wird für jedes Prüfteil anhand der Zuordnung der einzelnen Aufnahmen, die entlang dieser optimalen Bahnkurve gemacht wurden, zu der jeweiligen Projektionsgeometrie eine CT-Rekonstruktion mittels eines geeigneten Algorithmus durchgeführt. Für die Rekonstruktion wird eine aus dem Stand der Technik bekannte Software verwendet, beispielsweise die Software "CERA Xplorer" der Firma Siemens Healthcare GmbH.

Eine vorteilhafte Weiterbildung der Erfindung sieht vor, dass die Bestimmung der Position des Manipulators mittels Marker erfolgt, die während der Durchführung des Röntgen-CT-Verfahrens ortsfest zu dem Prüfteil angeordnet sind. Dadurch kann eine sehr gute Bestimmung der jeweiligen Projektionsgeometrie jeder Aufnahme erzielt werden. Somit können auch Manipulatoren mit geringer Präzision bezüglich ihrer Positionierung verwendet werden.

Eine weitere vorteilhafte Weiterbildung der Erfindung sieht vor, dass der Manipulator ein sechsachsiger Industrieroboter ist. Ein solcher Manipulator kann mit hoher Geschwindigkeit jede beliebige Position innerhalb des Röntgen-CT-Systems anfahren.

Eine weitere vorteilhafte Weiterbildung der Erfindung sieht vor, dass beispielsweise folgende Gütefunktion verwendet wird, die unter bestimmten Annahmen eine optimale Materialdurchstrahlbarkeit gewährleistet:

$$F = \sqrt{\alpha(1 - \frac{Q_{min}}{Q_{opt}})^2 + \beta(1 - \frac{Q_{min}}{Q_{opt}})^2(1 - \frac{\sigma}{\sigma_{opt}})^2 + \gamma(1 - \frac{E}{E_{opt}})^2} \overset{!}{=} min$$

.

Eine weitere vorteilhafte Weiterbildung der Erfindung sieht vor, dass der Optimierungsalgorithmus ein Downhill-Simplex-Algorithmus ist. Dieser Optimierungsalgorithmus benötigt für eine wie die obige Gütefunktion geringe Anzahl von Iterationen, um die optimalen Parameter der Bahnkurve zu bestimmen.

Eine weitere vorteilhafte Weiterbildung der Erfindung sieht vor, dass zur Auswahl der vorgebbaren Bahnkurve in eine weitere Gütefunktion einzeln oder in beliebiger Kombination einfließen: Bahnkurvenlänge, Vergrößerung, Platzbedarf, Komplexität, Merkmale zur Abfahrbarkeit des Industrieroboters, Erweiterbarkeit, Optimierbarkeit, Redundanz. Dadurch kann eine für die Applikation und das System geeignete Bahnkurve ermittelt werden.

Eine weitere vorteilhafte Weiterbildung der Erfindung sieht vor, dass das Verfahren nach einer vorgebbaren höchsten Anzahl von Iterationsschritten abgebrochen wird und mit der Bahnkurve des letzten Iterationsschritts das Verfahren zur Prüfung der weiteren Prüfteile durchgeführt wird. Da mit jedem Iterationsschritt das Ergebnis sich stetig dem Optimum annähert, wird so die benötigte Zeit für die Optimierung auf einen vorgegebenen Wert beschränkt.

Eine weitere vorteilhafte Weiterbildung der Erfindung sieht vor, dass die Optimierung der Parameter der Bahnkurve mittels eines Verkippens des Prüfteils erfolgt. Dadurch wird die Vollständigkeit der Trajektorie des Fokuspunktes gemäß dem Tuy-Smith Theorem nicht verändert, da sich die relative Bahnkurve des Manipulators mit dem Prüfobjekt nicht ändert, sondern nur die Orientierung des Prüfteils selbst.

Alle in den Unteransprüchen angegebenen Merkmale der vorteilhaften Weiterbildungen sind sowohl für sich jeweils einzeln als auch in beliebigen Kombinationen zur Erfindung gehörig.

Die Figuren zeigen:

Figur 1    Den Verlauf einer TB-Bahnkurve und deren Beschreibung mittels Polarkoordinaten,

Figur 2    verschiedene Koordinatensysteme eines Roboters,

Figur 3    eine Darstellung einer Helix-Bahnkurve mit gekipptem Prüfteil,

Figur 4    ein Histogramm eines Durchleuchtungsbilds eines Prüfteils,

Figur 5    eine Darstellung der Güte einer Helix-Bahnkurve in Abhängigkeit von der Anzahl an Projektionen,

Figur 6    eine Darstellung des Verlaufs des Quantils einer Helix-Bahnkurve in Abhängigkeit von der Anzahl an Projektionen,

Figur 7    einen Vergleich von Kreis-Bahnkurven mit unterschiedlicher Vergrößerung und

Figur 8    ein Konvergenzdiagramm einer Helix-Bahnkurve für eine Turbinenschaufel.

Im Folgenden wird ein vorteilhaftes Ausführungsbeispiel eines erfindungsgemäßen Verfahrens erläutert.

Das erfindungsgemäße Verfahren läuft in einem konventionellen Röntgen-CT-System (beispielsweise dem Modell "Y.MU56TB" der Firma YXLON International GmbH) ab, wobei bislang ein Industrieroboter (im Folgenden als Roboter bezeichnet), beispielsweise das Modell "MOTOMAN MH5" der Firma Yaskawa Electric Corporation, eingesetzt wird. Als Röntgenröhre wird beispielsweise das Modell "Y.TU-225-D04" der Firma YXLON International GmbH und als Röntgendetektor beispielsweise das Modell "XRD 0822 AP18 IND" der Firma PerkinElmer verwendet.

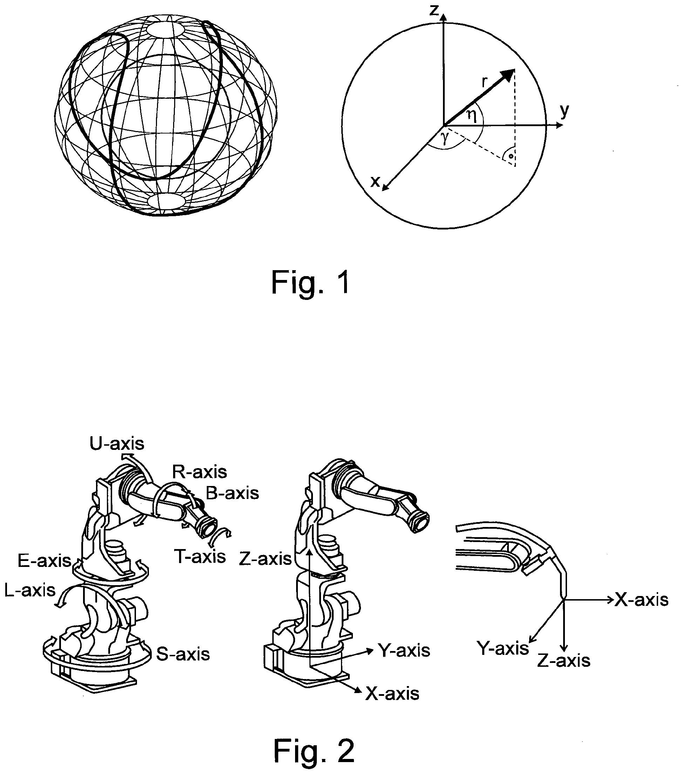

Die Umsetzung einer Bahnkurve erfolgt durch die relative Bewegung eines Roboters. Verschiedene Bahnkurven sind denkbar, unter anderem LC (Line-Circle), CC (Crossing Circles), CLC (Circle-Line-Circel), Helix, TB (Tennis Ball - siehe Figur 1).

Das Röntgen-CT-System besteht im Wesentlichen aus drei Einheiten. Eine davon ist eine strahlenschützende Bleikabine, in der die Röntgenquelle (Kegelstrahl), der Röntgendetektor (im Folgenden als Detektor bezeichnet) und der Roboter stehen. Hier wird ein Prüfteil vom Roboter gehalten und bewegt und mit Röntgenstrahlung durchleuchtet. Der Detektor wandelt die ankommende Strahlung und erzeugt das entsprechende Röntgenbild. Eine andere Einheit des Systems besteht aus einem Rechner mit Bedienerpult. Auf diesem Rechner läuft die Betriebssoftware der Anlage, durch die ein Anwender Einstellungen vornehmen und den Scanprozess steuern kann. Die vom Detektor erzeugten Bilder werden auf dem Rechner gespeichert und können anschließend untersucht werden. Die letzte Einheit besteht aus einem Schaltschrank inklusive einer speicherprogrammierbaren Steuerung (SPS) für die Steuerung des Systems.

Koordinatensystem

Die passende Wahl eines Koordinatensystems führt zu einer einfacheren Beschreibung und Umsetzung einer Bahnkurve. Deswegen sollte bereits beim Generieren der Bahnkurve ein Koordinatensystem ausgewählt werden, auf das sich die Koordinaten der berechneten Punkte beziehen.

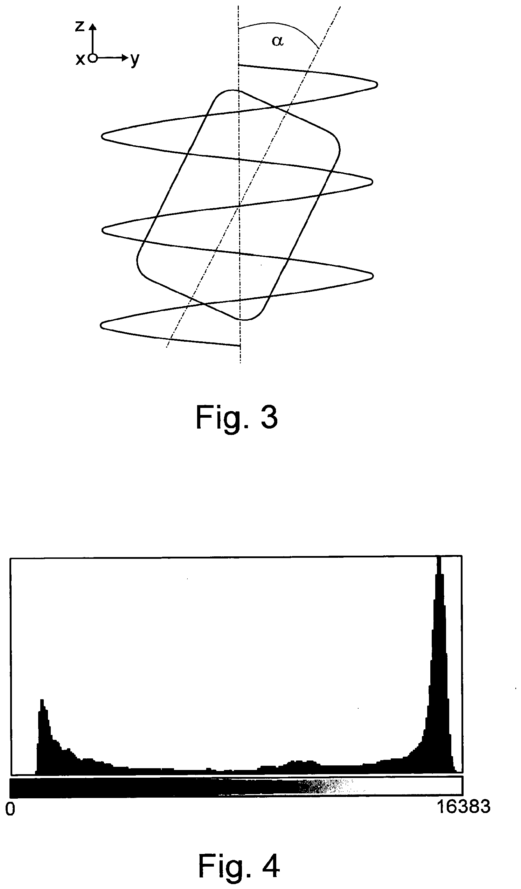

Das mittlere Bild der Figur 2 zeigt das kartesische Raumkoordinatensystem, das seinen Ursprung im rotatorischen Zentrum der ersten Achse (S-Achse) des Roboters hat. Dieses Koordinatensystem liegt unveränderlich im Raum. Es eignet sich gut für die Umsetzung von Kreis-Bahnkurven mit einem Einstellwinkel, also einer Drehung bei gleichzeitiger Verkippung des Prüfteils (exemplarisch in Figur 3 für eine Helix-Bahnkurve dargestellt). Für einen gegebenen Einstellwinkel wird die Drehung so umgesetzt, dass lediglich eine Koordinate verändert wird, nämlich die Orientierung um die Z-Achse. Das kartesische Raumkoordinatensystem eignet sich vor allem auch für die Umsetzung von Bewegungen entlang von Linien. Beim Abfahren entlang einer Linie, wie z.B. bei der Verstellung der Höhe in Z-Richtung, genügt nur die Veränderung einer Koordinate (Z-Koordinate) im Raumkoordinatensystem.

Schließlich ist im rechten Bild der Figur 2 das sogenannte

Werkzeugkoordinatensystem (tool frame) veranschaulicht. Der Ursprung dieses Koordinatensystems liegt im TCP (Tool Center Point) des Prüfteils. Da sich dieses Koordinatensystem mit dem Püfteil bewegt und relativ zu diesem immer gleich liegt, können Bewegungen relativ zur aktuellen Lage des Prüfteils besonders gut beschrieben werden. Es eignet sich speziell für die Umsetzung von Bahnkurven, die nicht durch eine Drehung um eine Hauptachse (z.B. Z-Achse), sondern durch eine Drehung um mindestens zwei Hauptachsen realisiert werden müssen. Dieses Koordinatensystem wird beispielsweise für die Umsetzung der TB-Bahnkurve verwendet.

Gütefunktion

Die Gütefunktion ist so zu formulieren, dass sie sich auf die Durchstrahlbarkeit des Prüfteils bezieht und damit indirekt Aufschluss über die Güte einer Rekonstruktion gibt. Eine gute Bahnkurve ist dann eine parametrisierte Bahnkurve, die zu einem kleinen Wert der Gütefunktion führt.

Die von der Röntgenquelle emittierte Strahlung durchleuchtet das Prüfteil. Je nach Materialdicke entlang des Weges werden einzelne Photonen absorbiert oder in ihrer Intensität geschwächt. Ein restlicher Teil der Strahlung durchquert das Prüfteil und trifft auf den Detektor, der ein Bild mit entsprechender Helligkeitsverteilung (Grauwertverteilung) erzeugt. Ist ein Teil des Prüfteils besser durchleuchtbar, dann ergibt sich ein helleres Bild mit höheren Grauwerten. Entsprechendes gilt für schlechter durchleuchtbare Stellen. Die Grauwerte des Bildes entsprechen also der Durchleuchtbarkeit des Prüfteils. Ein aufgenommenes Röntgenbild wird durch einen Array (1D) dargestellt, in dem die Grauwerte jedes Pixels gespeichert sind. Beispielsweise ergeben sich bei einem 14-Bit Detektor $2^{14}$ verschiedene mögliche Werte (0 - 16.383) pro Pixel.

In einem Histogramm werden die Häufigkeiten der Grauwerte des aufgenommenen Bildes grafisch dargestellt, bei dem auf der Abszisse der Grauwert und auf der Ordinate die jeweilige Häufigkeit dargestellt wird. In Figur 4 ist ein solches Histogramm für eine Turbinenschaufel dargestellt. Auffällig sind die beiden Häufungspunkte (Peaks) am linken und am rechten Rand. Der rechte Häufungspunkt weist hohe Grauwerte auf und beschreibt daher helle Pixel im Bild. Er kann dem hellen Hintergrund zugeordnet werden. Der linke Häufungspunkt weist kleine Grauwerte auf und beschreibt dagegen Stellen im Bild, die relativ dunkel sind. Er kann dem Prüfteil zugeordnet werden. Nun zeigt sich auch, warum die Turbinenschaufel relativ schlecht durchleuchtbar ist: Der linke Häufungspunkt liegt relativ nah am linken Rand der Verteilung. Damit weisen Teile der Turbinenschaufel sehr kleine Grauwerte auf. Dies ist darauf zurückzuführen, dass die Strahlung an bestimmten Stellen fast vollständig absorbiert/abgeschwächt wird und kaum den Detektor erreicht. Informationsverlust ist dadurch gegeben, dass die ankommende Strahlung so schwach ist, dass das entstehende Signal im Detektorrauschen verloren geht. In diesem Fall ist das entstehende Röntgenbild verdunkelt und die Dichteverteilung des Prüfteils nicht sichtbar. Dementsprechend ist auch die Rekonstruktion der Turbinenschaufel fehlerhaft.

Ein Kriterium der Gütefunktion ist es folglich, ihr Optimum an einer Stelle zu haben, die zu einem möglichst großen Grauwert des Bildes führt. Der kleinste Grauwert selbst kommt aber als direktes Maß nicht in Frage, weil er den Rauschprozessen der Anlage unterworfen ist und sich bei erneuter Messung verändert. Zu diesen Rauschprozessen gehören das Rauschen und das temperaturabhängige Verhalten des Detektors selbst, die stochastische Natur der Direktstrahlung und der Einfluss von reflektierter Streustrahlung. Anstelle des minimalen Grauwerts wird deswegen ein ausgewähltes Quantil des geordneten Satzes von Grauwerten verwendet. Das 3%-Quantil hat sich als ausreichend stabil gegenüber Rauschprozessen bewährt. Die Aufnahme einer Bahnkurve liefert eine Bilderserie. Folglich geht es generell darum, das minimale Quantil $Q_{min}$ aus allen Bildern einer Serie zu maximieren:

$$Q_{min} \overset{!}{=} max \qquad (5.1)$$

Diese Bedingung bezieht sich auf das schlechteste Bild einer Serie. Es werden jedoch keine Aussagen über die Verteilung der Quantile der Bilderserie gemacht. Besitzen beispielsweise zwei Bilderserien den gleichen schlechten Wert für $Q_{min}$, dann verfügen sie bisher über die gleiche Güte. Es kann aber sein, dass in der einen Bilderserie alle Bilder bis auf das Schlechteste ein relativ großes Quantil vorweisen und in der anderen Bilderserie alle Bilder bis auf das Schlechteste nur etwas besser sind, also deren Quantile nahe $Q_{min}$ liegen. In diesem Fall wäre die erste Bilderserie der zweiten vorzuziehen. Um die Verteilung der Quantile zu erfassen wird die Streuung der Quantile einer Serie zum minimalen Quantil $Q_{min}$ berücksichtigt. Die Berechnung erfolgt über die Varianz $S_{Qmin}$, die folgendermaßen berechnet wird:

$$S_{Qmin} = \frac{1}{n} \sum_{i}^{n} (Q_i - Q_{min})^2 .$$

Dabei beschreibt Qi das Quantil des i-ten Bildes einer Serie der Länge n. Dann ist die Streuung $\sigma$ der Quantile zum minimalen Quantil gegeben durch

$$\sigma = \sqrt{S_{Qmin}}.$$

Es wird also ebenfalls die Maximierung der Streuung bei einem relativ schlechten $Q_{min}$ angestrebt:

$$\sigma \stackrel{!}{=} max . \qquad (5.2)$$

Mit den beiden vorgenannten Bedingungen der Gleichungen 5.1 und 5.2 kann eine Gütefunktion aufgestellt werden, deren Optimierung (Minimierung) dazu führt, dass der linke Häufungspunkt im Histogramm der Figur 4 für alle Bilder einer Serie möglichst weit nach rechts geschoben wird.

Bis jetzt ist noch keine Aussage über die Verteilung der Grauwerte im Histogramm eines Bildes gemacht. Im extremen Fall könnten alle Pixel ungefähr den gleichen Grauwert besitzen. Dann würde es zur Ballung der Häufigkeiten zu einem einzigen großen und schmalen Peak im Histogramm kommen. Das Bild hätte in diesem Fall keinen Kontrast und damit keine Information. Für einen hohen Informationsgehalt ist deswegen eine flache, breite und gleichmäßige Verteilung der Grauwerte erwünscht. Als Maß für den Informationsgehalt wird die Bildentropie aus der Informationstheorie verwendet. Sie wird demnach definiert durch

$$E = - \sum_{i} p_i log_2(p_i) ,$$

wobei $p_i$ die Wahrscheinlichkeit des Auftretens des i-ten Grauwerts beschreibt ($0 \leq p_i \leq 1$). Die Basis 2 des Logarithmus ist der Literatur nach so ausgewählt, weil Binärziffern sich technisch besonders einfach handhaben lassen. Es ist ersichtlich, dass die Entropie als Maß genau die vorher geforderten Bedingungen mit sich bringt: Ist der relative Anteil des i-ten Grauwerts ($p_i$) zu klein oder zu groß, dann läuft die i-te Teilsumme gegen Null, denn in beiden Fällen wird einer der Faktoren $p_i$ oder $log_m(p_i)$ sehr klein. Im Falle einer gleichmäßigen Verteilung werden die Teilsummen und damit die Entropie maximal. Die Berechnung der Entropie bezieht sich dabei auf die Verteilung der des Prüfteil zugehörigen Grauwerte. Hierfür wird durch eine ausgearbeitete Methode der Hintergrund identifiziert und ausgeblendet. Das bedeutet, dass bei der Berechnung der Entropie die Grauwerte des rechten Peaks im Histogramm der Figur 4 ausgelassen werden. (Methoden der AdvancedMethods-Klasse).

Es wird folglich angestrebt, die Entropie einer Bilderserie möglichst groß zu machen. Damit das gewährleistet ist, sollte der Durchschnitt der Entropie einer Serie maximiert werden:

$$E_{Mittelwert} = \frac{1}{n} \sum_{i}^{n} E_i \stackrel{!}{=} max , \qquad (5.3)$$

wobei $E_i$ die Entropie des i-ten Bildes beschreibt. Diese Bedingung alleine ist noch nicht vollständig, da für einen zufriedenstellenden Mittelwert immer noch Bilder (Ausreißer) mit sehr kleinen Entropien vorliegen könnten. Mit anderen Worten hieße das, dass die Entropie um den Mittelwert stark streuen könnte. Um diesen Sachverhalt zu berücksichtigen, ist es wünschenswert, die Standardabweichung der Verteilung zum Durchschnittswert $E_{Mittelwert}$ zu minimieren:

$$\sigma_{Mittelwert} = \sqrt{\frac{1}{n} \sum_{i}^{n} (E_i - E_{Mittelwert})} \overset{!}{=} min \qquad (5.4)$$

Die Bedingungen der Gleichungen 5.3 und 5.4 können mit $E = E_{Mittelwert} - \sigma_{Mittelwert}$ zusammenfassend durch die Forderung

$$E \overset{!}{=} max \qquad (5.5)$$

beschrieben werden. Des Weiteren wird ein zulässiger Wertebereich der Grauwerte ($G_{min}$, $G_{max}$) definiert, in dem die Grauwerte der aufgenommenen Bilder liegen sollten. Grauwerte von Bildern, die kleiner als die Toleranzgrenze $G_{min}$ sind, führen zu Fehlern in der Rekonstruktion. Grauwerte, die über der Toleranzgrenze $G_{max}$ liegen, führen zu einer Übersättigung des Detektors. Ein Verstoß gegen diese harten Randbedingungen führt zum sofortigen Ausschluss einer Bahnkurve. Deswegen sollten Anlagenparameter, wie Spannung und Strom der Röntgenquelle, Dicke und Material eines eingesetzten Filters, Intensität des Detektors und Integrationszeit der Bestrahlung, stets so gewählt werden, dass die Randbedingungen erfüllt sind.

Die Bedingungen der Gleichungen 5.1, 5.2 und 5.5 werden in einer Gütefunktion $F (Q_{min}, \sigma, E)$ durch

$$F = \sqrt{\alpha(1 - \frac{Q_{min}}{Q_{opt}})^2 + \beta(1 - \frac{Q_{min}}{Q_{opt}})^2 (1 - \frac{\sigma}{\sigma_{opt}})^2 + \gamma(1 - \frac{E}{E_{opt}})^2} \overset{!}{=} min \qquad (5.6)$$

formuliert. Weil die Dimensionen der Zahlenwerte sich stark unterscheiden, werden die Größen normiert. Sie werden dabei durch angenommene optimale Werte $Q_{opt}$, $\sigma_{opt}$ und $E_{opt}$ dividiert. Ein Minimum (Optimum) der Gütefunktion F stellt einen Punkt dar, an dem die Größen möglichst nah an die ausgewählten optimalen Werte kommen. Die Gütefunktion F repräsentiert also durch ihre Formulierung einen Fehlerterm zu diesen optimalen Werten. Werden diese Werte genau erreicht, dann gilt $F (Q_{opt}, \sigma_{opt}, E_{opt}) = 0$. In der Praxis wird dieser Wert üblicherweise nicht erreicht. Es geht folglich darum, den Parametersatz einer Bahnkurve zu finden, der die Gütefunktion minimiert. Werte für $Q_{opt}$ und $\sigma_{opt}$ können aus Messungen geschätzt werden. Die maximal mögliche Entropie kann durch $E_{max} = \log_2(N_p)$ berechnet werden, wobei $N_p$ die Anzahl der Pixel des Detektors bezeichnet. Die Gewichtungsfaktoren $\alpha$, $\beta$ und $\gamma$ bestimmen die Prioritäten der Größen $Q_{min}$, $\sigma$ und E. Wird eine Größe stärker gewichtet als die anderen Größen, wird ihr in der Optimierung eine größere Relevanz verliehen. Im Rahmen des Ausführungsbeispiels der Erfindung wird die uniforme Gewichtung $\alpha = \beta = \gamma = 1$ verwendet.

Eine Besonderheit stellt der zweite Term der Gütefunktion in Gleichung 5.6 unterhalb der Wurzel dar. Hier wird der Fehlerterm von $\sigma$ nicht nur durch $\beta$, sondern ebenfalls mit dem dynamischen Faktor $(1 - Q_{min}/Q_{opt})^2$ gewichtet, der den Fehlerterm von $Q_{min}$ darstellt. Der Grund dafür liegt darin, dass die Streuung der Quantile einer Bilderserie zum minimalen Quantil $Q_{min}$ sinnvollerweise ein stärkeres Gewicht haben sollte, wenn das $Q_{min}$ schlecht ist und weiter entfernt vom optimalen Wert liegt. Ist das minimale Quantil $Q_{min}$ wesentlich größer und liegt bereits nah am Optimum, dann muss die Streuung der Quantile zu $Q_{min}$ nicht unbedingt groß ausfallen, denn die Bilderserie weist bereits hohe Quantile und damit zufriedenstellende Grauwerte auf.

Durch die Gütefunktion in Gleichung 5.6 kann jedem Parametersatz einer Bahnkurve durch die Auswertung der aufgenommenen Bilder eine Güte zugewiesen werden. Am Beispiel der Helix-Bahnkurve mit einer Turbinenschaufel als Prüfteil wird die Gütefunktion an diskreten Punkten im Parameterraum ausgewertet. Die Gütefunktion ist eine durchaus kontinuierliche glatte Verteilung.

Auswertungskriterien

Für die Auswahl der für die Applikation und das System optimalen Bahnkurve werden unterschiedliche Kriterien herangezogen. Neben der oben beschriebenen optimierten Güte spielen weitere Aspekte für die Bewertung eine Rolle, die weniger von der Wahl des Prüfteils selbst abhängen. Dabei fällt jedes Kriterium mit unterschiedlichem Gewicht in die Bewertung. Hat beispielsweise die alleinige Verbesserung der Rekonstruktion eines bestimmten Prüfteils höchste Priorität, wird insbesondere eine Minimierung der Gütefunktion angestrebt. In diesem Fall hätte das Kriterium optimierter Gütewert ein relativ großes Gewicht. Das Gewicht eines Kriteriums muss ein Anwender je nach individuellen Zielvorgaben bestimmen. Die Kriterien sind optimierter Gütewert, Bahnkurvenlänge, Vergrößerung, Platzbedarf, Komplexität, Merkmale zur Abfahrbarkeit des Roboters, Erweiterbarkeit, Optimierbarkeit und Redundanz. Im Folgenden werden diese Kriterien erläutert.

Optimierter Gütewert

Ein Kriterium ist der optimierte Wert der Gütefunktion (Minimum) nach dem Optimierungsprozess für ein gegebenes Prüfteil. Die Gütefunktion wird demnach so zusammengestellt, dass sie einen Fehlerterm repräsentiert, der im Rahmen der Optimierung der Güte der Bahnkurve entspricht. Eine in diesem Sinne gute Bahnkurve führt auf ein besseres Resultat der Rekonstruktion. Die damit erhaltenen Minima verschiedener Bahnkurven können untereinander verglichen werden und die Bahnkurve mit dem kleinsten Minimum, also diejenige mit dem geringsten Gütewert, ist damit theoretisch die beste. Dieser Vergleich ist jedoch praktisch nur bis zu einem gewissen Grad möglich, weil der scharfe Vergleich der Gütewerte von verschiedenen Faktoren abhängig ist, die diesen Vergleich rechtfertigen.

Einer dieser Faktoren ist die Anzahl der Bildprojektionen, die entlang der Bahnkurve während eines Scanvorgangs gemacht werden. Eine höhere Anzahl an Projektionen führt zu einer feineren Diskretisierung der Bahnkurve. Es ist ersichtlich, dass nur bei einer ausreichend hohen Anzahl an Projektionen genügend Informationen über das Prüfteil für eine möglichst vollständige Rekonstruktion gesammelt werden können. Ist die Anzahl der Projektionen gering, wird das Prüfteil logischerweise aus vielen Blickrichtungen nicht abgebildet und damit sinkt der Informationsgehalt.

Wird beispielsweise eine Kreis-Bahnkurve mit unendlich groß diskretisiert, wird der Abstand zwischen zwei Aufnahmepositionen der Röntgenquelle unendlich klein und die projizierten Bilder zweier benachbarter Aufnahmepositionen bei einem Detektor mit beschränkter Auflösung enthalten quasi dieselbe Information. Folglich führt eine immer größere Projektionszahl nicht immer zu einem größeren Informationsgehalt. Abhängig von der Pixelgröße und der Auflösung des Detektors sollte die Diskretisierung mindestens so groß (grob) sein, dass Bilder mit unterschiedlicher Information aufgenommen werden. Das bedeutet wiederum, dass der maximal mögliche Informationsgehalt mittels einer Mindestzahl an Projektionen erreicht werden kann. Da viele Projektionen mit hohen Scanzeiten (Kosten) verbunden sind, wird die Anzahl der Projektionen in der Praxis üblicherweise klein gehalten, weil der Informationszuwachs ab einer bestimmten Anzahl an Projektionen diese Kosten nicht mehr rechtfertigt.

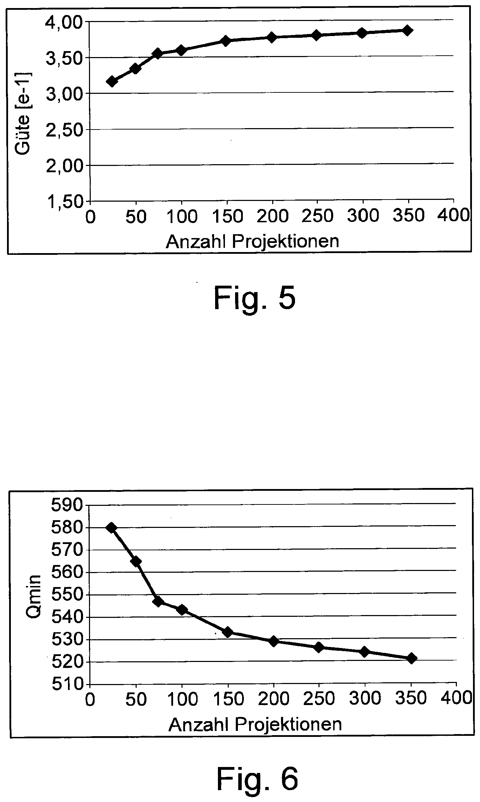

In Figur 5 wird die Güte einer Helix-Bahnkurve für unterschiedliche Projektionszahlen dargestellt. Es ist zu erkennen, dass kleinere Projektionszahlen fälschlicherweise zu einer besseren Güte führen (kleinerer Gütewert). Bei zunehmenden Projektionen ändert sich die Güte zunächst rapide und wird schlechter. Sie geht ab ca. 200 Projektionen in einen Sättigungsbereich über, in dem sie sich bei steigender Anzahl der Projektionen nicht mehr ändert. Der Grund für diesen Verlauf liegt, wie bereits oben erläutert, darin, dass erst ab einer ausreichend hohen Projektionszahl sämtliche Strahlrichtungen durch das Prüfteil berücksichtigt werden, die die Güte entscheidend beeinträchtigen. Diese Blickrichtungen werden bei wenigen Projektionen nicht "gesehen".

In Figur 6 ist illustriert, wie stark sich das 3%-Quantil ($Q_{min}$) einer Bilderserie, welches die Güte einer Bilderserie gravierend mitbestimmt, bei größerer Projektionszahl verändert. Demzufolge fällt der Wert von $Q_{min}$ bei steigender Projektionszahl um bis zu 11% ab.

Der Vergleich verschiedener Bahnkurven anhand der Güte erweist sich demnach in der Praxis als schwieriger, weil verschiedene Bahnkurven grundsätzlich unterschiedliche Anzahlen an Projektionen aufweisen und die Güte von dieser Anzahl abhängt. Es stellt sich folglich die Frage, wie groß die Anzahl der Projektionen der einen Bahnkurve und wie groß die Anzahl der Projektionen der anderen Bahnkurve sein müssen, damit der Vergleich sinnvoll ist. Eine extrem große Anzahl an Projektionen bei beiden Bahnkurven würde dieses Problem beheben, weil sich die Gütewerte dann bereits im Sättigungsbereich befinden würden. Dies ist aber mit extrem langen Scanzeiten verbunden und in der Praxis unrealistisch.

Bahnkurvenlänge

Ein weiteres Kriterium für den Vergleich zweier Bahnkurven ist die Länge einer Bahnkurve selbst. Diese Länge hängt von der Vergrößerung ab. Zwei Kreis-Bahnkurven sind unterschiedlich lang, wenn sie unterschiedliche Radien (Vergrößerungen) aufweisen. Um eine Basis für einen sinnvollen Vergleich zu schaffen, werden Bahnkurven daher bezüglich ihrer Länge bei gleicher Vergrößerung verglichen.

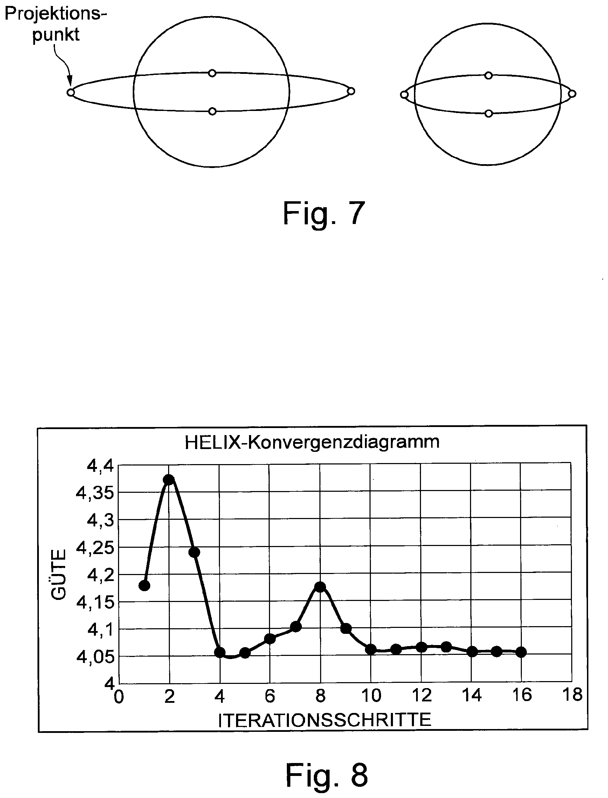

Die Bahnkurvenlänge gibt implizit Auskunft über die Anzahl an Projektionen, die während eines Scans entlang einer Bahnkurve aufgenommen werden. Damit der Vergleich der Längen von verschiedenen Bahnkurven bezüglich der Projektionszahl einheitlich und sinnvoll ist, werden die Kurven hinsichtlich der Aufnahmepositionen gleichermaßen diskretisiert und ein gleicher Abstand von Röntgenquelle zu Objekt wird eingehalten. Letzteres wird in Figur 7 weiter verdeutlicht. Hier werden zwei Kreis-Bahnkurven mit gleicher Diskretisierung (vier Projektionspunkte) aber unterschiedlichen Vergrößerungen (Kreisradien) dargestellt. Die linke Bahnkurve besitzt eine größere Bahnkurvenlänge als die rechte Bahnkurve. Die Projektionszahlen sind jedoch identisch. Dies würde der Formulierung weiter oben widersprechen. Bei gleicher Vergrößerung (Kreisradien) dagegen macht die Bahnkurvenlänge eine gültige Aussage über die Projektionszahl. Dieser Sachverhalt kann auf unterschiedliche Bahnkurven übertragen werden.

Eine größere Bahnkurvenlänge entspricht also einer höheren Anzahl an Projektionen und damit einer höheren Anzahl von Bildern, die aufgenommen werden. Diese Bilder werden in anschließenden Prozessen, wie z.B. der Rekonstruktion, verwertet. Bei steigender Anzahl von Bildern steigt auch der damit verbundene Rechen- und Speicheraufwand. Dieser Aspekt spielt vor allem dann eine Rolle, wenn das gewählte Bildformat relativ groß (Speicherplatz) und die Leistung des Rechners unzureichend ist. Werden Bilder von einem 14-Bit Detektor erfasst und im Tagged Image File Format (TIFF) mit einer Dateigröße von 2 MB gespeichert ergibt sich, ausgehend von 1.500 benötigten Projektionen für die Rekonstruktion einer Kreis-Bahnkurve, bereits ein auszuwertendes Dateivolumen von 3 GB.

Bei einer höheren Anzahl von Projektionen steigt auch die Dauer, die ein Scan benötigt. Die Zeit, die für die Aufnahme einer Bilderserie benötigt wird, hängt davon ab, wie schnell die Bildgebung des Systems hintereinander ausgeführt werden kann.

Es ist ebenfalls zu beachten, dass die Bildaufnahme während der Bewegung eine Unschärfe im Bild erzeugen kann und damit die minimale Durchlaufzeit ebenfalls begrenzt. In einem üblichen Scan werden die Bilder in Stillstand aufgenommen. Der Roboter fährt dazu einen Projektionspunkt an, wartet bis die Bildaufnahme erfolgt ist und beginnt dann erst weiterzufahren. Dieser Ansatz wird hier ebenfalls verfolgt. Ausgehend vom obigen Beispiel und einer benötigten Dauer von 1 Sekunde pro Projektion ergibt sich bereits eine Gesamtdauer von 25 Minuten für eine einfache Kreis-Bahnkurve.

Es ist von großem Interesse, die Scandauer so gering wie möglich zu halten. Dies ist nicht nur gewollt, um Energie (Kosten) zu sparen, sondern auch weil sich Betriebsparameter ändern, wie z.B. die Temperatur und damit das Detektorverhalten. Je länger ein Scan dauert, desto stärker können sich diese Parameter verändern und damit die Qualität der aufgenommene Bilderserie beeinflussen. Aus diesem und den oben genannten Gründen ist im Vergleich eine Bahnkurve mit einer kleineren Bahnkurvenlänge als die Bessere zu bewerten.

Vergrößerung und Platzbedarf

Die Vergrößerung einer Bahnkurve beschreibt, wie groß das projizierte Bild des Prüfteils auf dem Detektor abgebildet wird. Die Vergrößerung als Vergleichskriterium einer Bahnkurve gibt wieder, wie groß die projizierten Aufnahmen während eines Scans entlang dieser Bahnkurve maximal werden können. Eine größere Aufnahme ist vorteilhaft, weil sie das Prüfteil in einer höheren Auflösung darstellt und Details über innere Strukturen besser sichtbar macht. Die Vergrößerung wird formal durch den Abstand der Röntgenquelle zum TCP des Prüfteils definiert. Dieser Abstand wird Focus-Object-Distance (FOD) genannt. Je größer der FOD ist, desto kleiner wird das auf dem Detektor projizierte Bild. Folglich ist eine Bahnkurve mit einer stärkeren Vergrößerung diejenige, die einen kleineren FOD besitzt.

Die erlaubten Vergrößerungen der fraglichen Bahnkurven hängen primär davon ab, ab welchem minimal zulässigen FOD die Vollständigkeitsbedingung nach TST verletzt ist. Die Vollständigkeitsprüfung geschieht unter Berücksichtigung des effektiven Kegelwinkels der Röntgenstrahlung. Bei einem größeren Kegelwinkel wird das Prüfteil in mehreren Richtungen durchstrahlt und die Bahnkurve kann sogar bei kleineren FODs vollständig bleiben. Ist der Kegelwinkel zu klein, wird sich das negativ auf den minimal zulässigen FOD und damit auf die maximal zulässige Vergrößerung auswirken. Es ist daher nachvollziehbar, dass beispielsweise die CLC-Bahnkurve eine stärkere Vergrößerung erlaubt als die LC-Bahnkurve, da für einen gegeben Kegelwinkel die Kreis-Bahnkurve der LC-Bahnkurve das Bauteil vollständig durchleuchten muss, aber bei der CLC-Bahnkurve die Durchleuchtung auf zwei Kreise aufgeteilt werden kann.

Eine weitere Eigenschaft, die mit der Vergrößerung zusammenhängt, ist der räumliche Platzbedarf der Bahnkurve. Eine Bahnkurve wird umgesetzt, indem der Roboter, der das Prüfteil in seinem Greifer hält, die relative Bewegung ausführt. Für diese Bewegung wird freier Platz in der Anlage (Röntgenkabine) benötigt. Dieser Platz ist üblicherweise so begrenzt, dass zwar entlang der Höhe ausreichend Platz vorhanden ist, jedoch in Längsrichtung (Strahlrichtung) geometrische Randbedingungen zu beachten sind, damit eine Kollision primär mit der Röntgenquelle oder dem Detektor verhindert wird. Das bedeutet also, dass der maximal zulässige FOD beschränkt ist. Von dieser Begrenzung sind in erster Linie die Bahnkurven betroffen, die nur schwache Vergrößerungen (größere FODs) erlauben. Denn genau in diesem Fall kann es passieren, dass der benötigte FOD mit den geometrischen Randbedingungen nicht übereinstimmt.

Es kann zusammengefasst werden, dass eine Bahnkurve, die eine starke Vergrößerung erlaubt, weniger räumlichen Platz benötigt. Eine Bahnkurve, die wenig Platz benötigt, ist im Vergleich als die Bessere zu bewerten.

Komplexität

Ein anderes Vergleichskriterium ist die Komplexität einer Bahnkurve. Sie beschreibt, wie komplex der Verlauf der Bahnkurve ist und gibt Auskunft darüber, mit welchem Aufwand die praktische Umsetzung dieser Bahnkurve erfolgt.

Eine Bahnkurve wird vom Roboter so realisiert, dass er eine Folge von Koordinaten abfährt, die ihm mittels eines Roboterjobs übergeben werden. Diese Punkte werden zuvor aus einem mathematischen Modell der Bahnkurve berechnet. Je komplexer jedoch die Bahnkurve ist, desto aufwendiger wird die mathematische Beschreibung und desto schwieriger wird die Diskretisierung. Unter Umständen müssen die Punkte der Bahnkurve approximativ über ein Hilfsmodell berechnet werden. Diese Tatsache wird am Beispiel der TB-Bahnkurve verdeutlicht, deren Diskretisierung auf die Lösung von elliptischen Integralen zurückgeht, die analytisch nicht lösbar sind. Mit steigender Komplexität steigt die Fehleranfälligkeit bei der Umsetzung.

Ein weiterer Punkt ist die subjektive Bewertung der Richtigkeit einer Bahnkurve. Bahnkurvenelemente, wie Linien und Kreise, können in den ersten Testschritten bereits vom bloßen Auge des Anwenders auf ihre korrekte Ausführung bewertet werden. Ein falscher Bahnkurvenparameter einer komplexeren Bahnkurve ist dagegen relativ schlecht erkennbar, weil die Richtigkeit dieser Bahnkurve schlechter eingeschätzt werden kann. In diesem Fall macht sich ein Fehler eher zu einem späteren Zeitpunkt bemerkbar, was sich negativ auf die Effizienz auswirken kann.

Der Grad der Komplexität spiegelt sich darin wider, in welchem Maße die Bahnkurve aus einfachen geraden Linien- und Kreiselementen besteht (z.B. LC-Bahnkurve) oder ob es sich um eine Kombination dieser zu anderen ungewöhnlicheren Elementen handelt (z.B. TB-Bahnkurve). Die Bahnkurven bestehen größtenteils aus Linien- und Kreiselementen. Im Rahmen des Ausführungsbeispiels der Erfindung gilt folgender Sachverhalt bei der Umsetzung dieser Bahnkurven: Von Seiten des Roboters werden die linienförmigen Elemente der Bahnkurven durch Bewegung entlang eines der Hauptachsen im Raumkoordinatensystem realisiert. Daher wird diese Bewegung durch Veränderung einer Koordinate umgesetzt. Die Kreiselemente der Bahnkurven werden durch Drehung um eine der Hauptachsen realisiert. Diese Drehung wird ebenfalls durch die Veränderung einer Koordinate (Orientierung) im Raumkoordinatensystem umgesetzt. Bahnkurven, die nicht nur aus Linien- und Kreiselementen bestehen (Helix- und TB-Bahnkurve), werden durch Veränderung mehrerer Koordinaten in jedem Schritt realisiert. Der Grad der Komplexität einer Bahnkurve kann folglich dadurch wiedergegeben werden, wie viele Koordinaten des Roboters im Raumkoordinatensystem sich bei der Umsetzung in jedem Schritt verändern. Die Komplexität gibt implizit Auskunft darüber, mit welcher Leichtigkeit eine Bahnkurve praktisch umgesetzt wird.

Roboterspezifische Merkmale

Ein weiteres Vergleichskriterium betrifft Merkmale des Roboters, die die Abfahrbarkeit der Bahnkurve oder die Qualität der aufgenommenen Bilder entlang einer Bahnkurve betreffen.

Eines dieser Merkmale ist die Begrenzung der letzten Drehachse (T-Achse) des verwendeten Roboters. Sie ist standardmäßig so eingestellt, dass sie zwei ganze Umdrehungen ausführen, also von 0° - 720° rotieren kann. Ein weiteres Verdrehen würde die Kabel der Elektronik des eingesetzten Robotergreifers überspannen und beschädigen. Diese Begrenzung wirkt sich auf die Abfahrbarkeit von Bahnkurven aus, die eine Verdrehung der T-Achse über 720° erfordern.

Dies kann beispielsweise anhand der Helix-Bahnkurve in aufrechter Position veranschaulicht werden. Die Helix wird hierbei durch eine Veränderung der Höhe und durch eine Drehung der T-Achse realisiert. Nach zwei Windungen der Helix hat sich die Achse um 720° gedreht. Für das Abfahren der nächsten Windung wird ein weiteres Verdrehen benötigt, kann von der T-Achse jedoch nicht umgesetzt werden. Aus diesem Grund wird nach Erreichen der Begrenzung das eigentliche Abfahren der Bahnkurve unterbrochen, so dass die T-Achse um 360° zurück gedreht werden kann. In dieser Phase werden keine Bilder aufgenommen. Nach der Drehung befindet sich der Roboter bezüglich des Koordinatensystems an derselben Stelle wie zuvor und die Bahnkurve kann anschließend fortgesetzt werden. Diese Umstellbewegungen, die nicht Teil der eigentlichen Bahnkurve sind, wirken sich üblicherweise negativ auf die Genauigkeit aus, denn dass nach der Umstellphase genau die selbe Position wie vor der Umstellbewegung erlangt wird, ist durch Ungenauigkeiten des Roboters und mechanisches Spiel nur begrenzt gegeben. Es ist folglich eine Bahnkurve wünschenswert, die mit möglichst wenigen Umstellbewegungen realisiert werden kann.

Zu diesen Umstellbewegungen gehört auch das erneute Ansetzen eines Punktes aufgrund der Eigenart der Bahnkurve selbst, wie z.B. bei der CC-Bahnkurve. Nach Abfahren des ersten Kreises muss der Roboter zum Startpunkt des zweiten Kreises ansetzen. Während die Umstellbewegungen aufgrund roboterspezifischer Begrenzungen durch Verbesserung oder Austausch der Hardwarekomponenten vermindert werden können, sind Umstellbewegungen aufgrund der Natur einer Bahnkurve unvermeidbar.

Ein anderes Merkmal, das einen indirekten Einfluss auf die Tauglichkeit bezüglich einer Bahnkurve hat, ist das Ausmaß der Einwirkungen von Elementen, die zum Roboter gehören und die Qualität der aufgenommenen Bilder beeinflussen. Diese Störelemente sind neben dem Prüfteil ebenfalls in den projizierten Bildern zu sehen und beeinträchtigen damit das Resultat. Die Beeinträchtigung kann zu einer verfälschten Bildanalyse sowie einer fehlerhaften Rekonstruktion führen. Das Zustandekommen solcher Störelemente in den Aufnahmen einer Serie ist oft unvermeidbar, weil Aufnahmen des Prüfteils aus verschiedenen Blickrichtungen für die Vollständigkeit der Bahnkurve nötig sind. Bei den Störelementen handelt es sich in erster Linie um den verwendeten Robotergreifer selbst, der aus einem dichten Material besteht und deutlich im Röntgenbild zu sehen ist.

Um den Einfluss des Robotergreifers in den Bildern einer aufgenommen Serie zu verhindern, kann der Greifer aus den Bildern ausgeschnitten werden, soweit dies möglich ist. Für diesen Zweck wurde hier ein Algorithmus entworfen, der auf dem Floodfill-Algorithmus aus der Computergrafik basiert. Dieser untersucht das untere Drittel eines Bildes, in dem der Greifer üblicherweise nicht abgebildet wird, in vordefinierten Testpixeln und identifiziert ein dem Prüfteil entsprechendes Pixel. Für die Erkennung wird eine Schwelle definiert, unter dieser ein Grauwert dem Prüfteil zugeordnet werden kann. Ausgehend von diesem Startpixel werden umgebende Pixel auf ihre Grauwerte untersucht und entweder dem Prüfteil oder der Umgebung zugewiesen. Im rekursiven Ansatz werden für jedes Pixel die vier (oder acht) benachbarten Pixel geprüft. Dieser Ansatz hat den Nachteil, dass er aufgrund der hohen Anzahl an Rekursionen zu einem Stack-Overflow (Pufferüberlauf des Speichers) führen kann und aufgrund von mehrmaliger und damit überflüssiger Prüfung derselben Pixel relativ viel Rechenzeit benötigt. Wird dieser Algorithmus verwendet, um aus einer Bilderserie von 50 Bildern den Robotergreifer auszublenden, dann benötigt dieser etwa vier Minuten Rechenzeit.

Aus diesem Grund wird der iterative Ansatz (basierend auf einem Stapelspeicher) verfolgt, bei dem Pixel im Bild entlang von Linien geprüft werden. Dieser Ansatz ist nicht nur sicherer im Sinne eines Stack-Overflows, sondern auch erheblich schneller, weil die unnötige Prüfung bereits geprüfter Pixel stark verringert wird.

Durch den obigen Algorithmus können alle Pixel bestimmt werden, die das Prüfteil darstellen. Alle anderen Pixel beschreiben folglich die Umgebung, wie Greifer und Hintergrund. Ihnen wird ein neutraler Grauwert zugewiesen, wodurch unter anderem der Greifer wie gewünscht ausgeblendet wird. Schließlich entsteht ein bearbeitetes Bild, auf dem nur das Prüfteil mit neutralem Hintergrund zu sehen ist.

Die Anwendung des oben genannten Algorithmus ist jedoch nicht immer möglich. Es wird dann problematisch, wenn Störelemente einen ähnlichen Grauwert wie das Prüfteil besitzen und die Konturen dieser sich in der projizierten Aufnahme überdecken. In diesem Fall verbinden sich die Konturen des Prüfteils mit denen des Greifers über die abgebildete Greiferschraube. Folglich ist der Algorithmus nicht mehr fähig zwischen Grauwerten des Prüfteils und Grauwerten des Greifers zu unterscheiden. Deswegen kann das Prüfteil nicht mehr eindeutig bestimmt werden. Das Absenken der Toleranzgrenze kann unter Umständen zu einer besseren Trennung führen, doch dies führt meist dazu, dass Teile des Prüfteils selbst "ausgeschnitten" werden.

Erweiterbarkeit

Ein anderes Vergleichskriterium ist die Möglichkeit einer geeigneten Erweiterung einer Bahnkurve für den vollständigen Scan von Prüfteilen, deren größere Abmessungen einen herkömmlichen Scan nicht ermöglichen. Dabei bezieht sich dieses Kriterium darauf, wie einfach und unproblematisch diese Erweiterung ist. Bei den genannten Prüfteilen kann es sich beispielsweise um einen langen Zylinder (z.B. Rohr) handeln, der aufgrund der maximal möglichen Vergrößerung nicht als ganzes komplett abgebildet werden kann. In solch einem Fall können einzelne Teile des Prüfteils für einen vollständigen Scan der Reihe nach schrittweise gescannt werden. Für diesen Zweck wird eine Bahnkurve um weitere für sie typische Elemente ergänzt. Ein anschauliches Beispiel ist die Ergänzung der CLC-Bahnkurve. Wenn die CLC-Bahnkurve das längliche Prüfteil nicht komplett erfassen kann, wird diese Bahnkurve um weitere Bahnkurvenelemente ergänzt, damit sie vollständig wird. In diesem Beispiel ist die Erweiterung naheliegend. Bei anderen Bahnkurven, wie z.B. der TB-Bahnkurve, ist eine geeignete Erweiterung aufgrund des charakteristischen Verlaufes der Bahnkurve kaum möglich.

Optimierbarkeit und Redundanz

Ein weiteres Kriterium für die Bewertung einer Bahnkurve ist die Optimierbarkeit. Die Optimierbarkeit in der Gesamtheit hängt von zahlreichen Faktoren ab. In folgender Betrachtung wird sie jedoch primär durch die benötigte Anzahl der Iterationsschritte des Optimierungsprozesses bestimmt, welche der Konvergenzgeschwindigkeit entspricht (in Figur 8 ist beispielhaft ein Konvergenzdiagramm für eine Helix-Bahnkurve dargestellt). Die Konvergenzgeschwindigkeit hängt wiederum von der Anzahl der zu optimierenden Parameter und von der Bahnkurvenlänge ab. Eine zunehmende Anzahl an Optimierungsparametern führt bei Anwendung des Simplexverfahrens dazu, dass weitere Suchrichtungen im Parameterraum hinzukommen. In diesem Fall läuft die Suche eines Optimums in einem höherdimensionalen Parameterraum ab und benötigt dafür mehr Zeit. Des Weiteren führt ebenfalls eine größere Bahnkurvenlänge zu einer höheren Scandauer. Da diese Scandauer in jedem Iterationsschritt für das Abfahren der Bahnkurve benötigt wird, wirkt sie sich somit ebenfalls auf die allgemeine Konvergenzgeschwindigkeit aus.

Ein weiterer Aspekt, der damit zusammenhängt, ist der Redundanzgrad einer Bahnkurve. Sie beschreibt in welchem Maße in einem Scan entlang der Bahnkurve Bilder aufgenommen werden, die für die Rekonstruktion redundant sind und damit keine neuen Informationen liefern. Für einen Parallelstrahl entlang einer Kreis-Bahnkurve ist es leicht nachzuvollziehen, dass die Strahlung durch das Prüfteil nach einer Drehung von 180° denselben Strahlenweg durchläuft. Das entstehende Röntgenbild aus beiden Positionen ist qualitativ dasselbe. Deswegen ist bei dem Scan einer Kreis-Bahnkurve mit Parallelstrahlung eine halbe Kreis-Bahnkurve ausreichend. Für die Kegelstrahlung gelten ähnliche Betrachtungen. Hier ist theoretisch eine halbe Umdrehung (180°) plus dem Kegelwinkel der Röntgenquelle ausreichend.

Zusammenfassende Betrachtung

Die Bewertungen der Bahnkurven werden für die Turbinenschaufel tabellarisch in Tabelle 1 festgehalten.

Der optimierte Gütewert geht aus dem oben erläuterten Optimierungsprozess hervor und ist abhängig vom ausgewählten Prüfteil. Er bezieht sich hier auf die Turbinenschaufel. Die Bahnkurvenlänge ist ebenfalls von der Geometrie der Turbinenschaufel abhängig. Alle weiteren Kriterien beziehen sich auf allgemeine Charakteristika der jeweiligen Bahnkurve.

Die LC-Bahnkurve erzielt bezüglich der Kriterien im Mittel die beste Bewertung. Sie sticht durch ihren charakteristisch einfachen Verlauf hervor, welche sich positiv auf die Bewertung der meisten Kriterien auswirkt. Sie fällt besonders durch einen kleinen optimierten Gütewert, eine kleine Bahnkurvenlänge, eine geringe Komplexität und einen geringen Einfluss roboterspezifischer Merkmale auf.

Die TB-Bahnkurve schneidet im Schnitt mit einer ähnlichen, jedoch etwas negativeren Bewertung ab. Sie glänzt durch einen kleinen optimierten Gütewert, eine kleine Bahnkurvenlänge, einen geringen Einfluss roboterspezifischer Merkmale und eine gute Optimierbarkeit. Ihr charakteristischer Verlauf führt zu einer hohen Komplexität, welche sich unter anderem negativ auf die Bewertung auswirkt. Durch ihren eigenartigen Verlauf stellt sie eine spezielle Bahnkurve dar, die sich grundsätzlich stark von den anderen unterscheidet.

Die Helix-, CC- und CLC-Bahnkurven erzielen im Schnitt insgesamt eine schlechtere Bewertung. Sie eignen sich gut hinsichtlich einiger Kriterien, die der Tabelle 1 entnommen werden können.

Bei der Bewertung der Bahnkurven werden die Vergleichskriterien üblicherweise nicht gleich gewichtet. Die Gewichtsverteilung der Kriterien muss jeder Anwender bezüglich individueller Zielvorgaben unter Berücksichtigung der Eigentümlichkeiten der verwendeten Röntgenanlage und des zu prüfenden Bauteils festlegen. Für eine unterschiedliche Gewichtung gehen die Beurteilungen aus Tabelle 1 mit einem Gewichtungsfaktor in die Bewertung ein.

Die Optimierung der Bahnkurve bezüglich der Gütefunktion führt zu einer verbesserten Durchstrahlbarkeit des Prüfteils. Mit einer verbesserten Durchstrahlbarkeit ist eine verbesserte Röntgenbildqualität sowie eine verbesserte Röntgenbildrekonstruktion des Prüfteils möglich. Aus diesem Grund steht das Kriterium optimierter Gütewert im Vordergrund. Bezüglich dieses Kriteriums erzielen die LC- und die TB-Bahnkurve nach Tabelle 1 das beste Ergebnis.

Die LC-Bahnkurve führt zur besten Güte, obwohl sie einen vergleichsmäßig einfachen charakteristischen Verlauf hat. Bei der TB-Bahnkurve ist das Ergebnis zu erwarten gewesen: Ihr charakteristischer Verlauf eignet sich bei der länglichen Geometrie der Turbinenschaufel dazu, "schlechte" Richtungen bezüglich der Durchstrahlung des Prüfteils zu vermeiden. Bei speziellen Prüfteilgeometrien, bei denen Kreis- oder Linienbahnen zu keiner zufriedenstellenden Güte führen, liefert sie ein potenziell besseres Ergebnis. Die Helix-, CC- und CLC-Bahnkurven ergeben nach dem Optimierungsprozess eine mäßige Güte und sind deswegen für die Optimierung der Durchstrahlung der Turbinenschaufel weniger geeignet.

Die optimalen Parametersätze der Bahnkurven resultieren in einer optimierten Bahn für die Turbinenschaufel. Auch entlang der optimierten Bahnkurve ist die Durchstrahlbarkeit der verwendeten Turbinenschaufel bei der verwendeten Röntgenanlage nicht hinreichend. Dies liegt daran, dass in der verwendeten Röntgenanlage für eine hinreichende Durchstrahlung die Leistung der Röntgenquelle (225 kV Röntgenröhre) nicht ausreicht. Diese Tatsache war bereits im Voraus bekannt und stellt kein Problem dar, weil es im Rahmen der Erfindung hauptsächlich um die Konzeptionierung einer prinzipiellen Optimierungsprozedur geht, die ohne Beschränkung der Allgemeinheit anhand der verwendeten Röntgenanlage ausgearbeitet wurde. Diese Optimierungsprozedur kann auf andere Anlagen und andere Prüfteile übertragen werden.

Schlussendlich kann anhand der bekannten Projektionsgeometrien in Verbindung mit den zugeordneten Projektionsbildern über aus dem Stand der Technik bekannte Methoden und Algorithmen eine sehr gute dreidimensionale Rekonstruktion des Prüfteils erfolgen - beispielsweise mittels der Software "CERA Xplorer" der Firma Siemens Healthcare GmbH.

Tabelle 1

| | HLX | LC | CC | CLC | TB |
|---|---|---|---|---|---|
| Optimierter Gütewert (T-Schaufel) | - | + | 0 | - | + |
| Trajektorienlänge (T-Schaufel) | 0 | + | 0 | - | + |
| Vergrößerung u. Platzbedarf | + | - | - | 0 | - |
| Komplexität | 0 | + | + | + | - |
| Roboterspezifische Merkmale | - | + | 0 | 0 | + |

(fortgesetzt)

|  | HLX | LC | CC | CLC | TB |
|---|---|---|---|---|---|
| Erweiterbarkeit | + | 0 | - | + | - |
| Optimierbarkeit | 0 | 0 | 0 | - | + |

**Patentansprüche**

1. Verfahren zur Rekonstruktion eines Prüfteils bei einem Röntgen-CT-Verfahren in einem Röntgen-CT-System, das eine Röntgenquelle mit Fokus, einen Röntgendetektor und einen Manipulator, der das Prüfteil innerhalb des Röntgen-CT-Systems bewegt, aufweist,
   wobei zur Generierung von Aufnahmen des Prüfteils in verschiedenen Positionen der Manipulator eine vorgebbare parametrisierbare Bahnkurve abfährt und an getriggerten Positionen die Aufnahmen macht,
   wobei die Position des Manipulators für jede Aufnahme bestimmt wird und daraus die jeweilige zugehörige Projektionsgeometrie berechnet wird, danach wird für diese Bahnkurve ein Wert einer Gütefunktion berechnet und danach wird eine weitere Bahnkurve durchfahren, die zu der vorangegangenen Bahnkurve unterschiedliche Parameter aufweist, während diese Bahnkurve durchfahren wird, werden weiterer Aufnahmen des Prüfteils an den getriggerten Positionen generiert und hierfür der Wert der Gütefunktion berechnet,
   der zuletzt genannte Schritt wird wiederholt,
   iterativ wird die Bahnkurve mittels eines Optimierungsalgorithmus ermittelt, bei deren Wert die Gütefunktion minimal ist,
   von weiteren, zum genannten Prüfteil gleichen Prüfteilen werden Aufnahmen entlang der Bahnkurve erstellt, bei der vorher das Minimum der Gütefunktion festgestellt wurde,
   und es wird für jedes Prüfteil anhand der Zuordnung der einzelnen Aufnahmen zu der jeweiligen Projektionsgeometrie eine CT-Rekonstruktion mittels eines geeigneten Algorithmus durchgeführt.

2. Verfahren nach Patentanspruch 1, wobei die Bestimmung der Position des Manipulators mittels Marker erfolgt, die während der Durchführung des Röntgen-CT-Verfahrens ortsfest zu dem Prüfteil angeordnet sind.

3. Verfahren nach einem der vorstehenden Patentansprüche, wobei der Manipulator ein sechsachsiger Industrieroboter ist.

4. Verfahren nach einem der vorstehenden Patentansprüche, wobei folgende Gütefunktion verwendet wird:

$$F = \sqrt{\alpha(1 - \frac{Q_{min}}{Q_{opt}})^2 + \beta(1 - \frac{Q_{min}}{Q_{opt}})^2(1 - \frac{\sigma}{\sigma_{opt}})^2 + \gamma(1 - \frac{E}{E_{opt}})^2} \overset{!}{=} min$$

mit Gewichtungsfaktoren $\alpha$, $\beta$ und $\gamma$ für die Prioritäten der Größen $Q_{min}$, $\sigma$ und E, mit $Q_{min}$ minimales Quantil aus allen Aufnahmen einer Serie, $Q_{opt}$ optimaler Wert des Quantils, mit $\sigma$ Streuung der Quantile zum minimalen Quantil, mit $\sigma_{opt}$ optimaler Wert der Streuung, mit E Entropie und mit $E_{opt}$ optimaler Wert der Entropie.

5. Verfahren nach einem der vorstehenden Patentansprüche, wobei der Optimierungsalgorithmus ein Downhill-Simplex-Algorithmus ist.

6. Verfahren nach einem der vorstehenden Patentansprüche, wobei zur Auswahl der vorgebbaren Bahnkurve in eine weitere Gütefunktion einzeln oder in beliebiger Kombination einfließen: Bahnkurvenlänge, Vergrößerung, Platzbedarf, Komplexität, Merkmale zur Abfahrbarkeit des Industrieroboters, Erweiterbarkeit, Optimierbarkeit, Redundanz.

7. Verfahren nach einem der vorstehenden Patentansprüche, wobei das Verfahren nach einer vorgebbaren höchsten Anzahl von Iterationsschritten abgebrochen wird und mit der Bahnkurve des letzten Iterationsschritts das Verfahren zur Prüfung der weiteren Prüfteile durchgeführt wird.

8. Verfahren nach einem der vorstehenden Patentansprüche, wobei die Optimierung mittels eines Verkippens des Prüfteils erfolgt.

**Claims**

1. Method for the reconstruction of a test part in an X-ray CT method in an X-ray CT system, which has an X-ray source with focus, an X-ray detector and a manipulator which moves the test part within the X-ray CT system,

wherein, in order to generate recordings of the test part in different positions, the manipulator travels a presettable parameterizable path curve and makes the recordings at triggered positions,

wherein, for each recording, the position of the manipulator is determined and the respective associated projection geometry is calculated therefrom, then a value of a quality function is calculated for this path curve and then a further path curve is travelled which has parameters different from the previous path curve, further recordings of the test part are generated at the triggered positions while this path curve is travelled, and the value of the quality function is calculated for this,

the last-named step is repeated,

the path curve is determined iteratively, by means of an optimization algorithm, at the value of which the quality function is minimal,

recordings of further test parts identical to the named test part are made along the path curve at which the minimum of the quality function was previously established,

and a CT reconstruction is carried out by means of a suitable algorithm for each test part based on the assignment of the individual recordings to the respective projection geometry.

2. Method according to claim 1, wherein the determination of the position of the manipulator is effected by means of markers which are arranged fixed with respect to the test part while the X-ray CT method is carried out.

3. Method according to one of the previous claims, wherein the manipulator is a six-axis industrial robot.

4. Method according to one of the previous claims, wherein the following quality function is used:

$$F = \sqrt{\alpha(1 - \frac{Q_{min}}{Q_{opt}})^2 + \beta(1\frac{Q_{min}}{Q_{opt}})^2(1 - \frac{\sigma}{\sigma_{opt}})^2 + \gamma(1 - \frac{E}{E_{opt}})^2} \stackrel{!}{=} min$$

with weighting factors $\alpha$, $\beta$ and $\gamma$ for the priorities of the quantities $Q_{min}$, $\sigma$ and E, with $Q_{min}$ the minimum quantile of all the recordings of a series, $Q_{opt}$ the optimum value of the quantile, with $\sigma$ the spread of the quantiles with respect to the minimum quantile, with $\sigma_{opt}$ the optimum value of the spread, with E the entropy and with $E_{opt}$ the optimum value of the entropy.

5. Method according to one of the previous claims, wherein the optimization algorithm is a downhill simplex algorithm.

6. Method according to one of the previous claims, wherein, for the selection of the presettable path curve, a further quality function is influenced, individually or in any combination, by the following: path curve length, magnification, space requirement, complexity, features relating to the ability to travel of the industrial robot, expandability, optimizability, redundancy.

7. Method according to one of the previous claims, wherein the method is stopped after a presettable highest number of iteration steps, and the method for testing the further test parts is carried out with the path curve of the last iteration step.

8. Method according to one of the previous claims, wherein the optimization is effected by means of a tilting of the test part.

**Revendications**

1. Procédé de reconstruction d'un élément de test dans le cadre d'un procédé de tomographie à rayons X dans un système de tomographie à rayons X comportant :

une source de rayons X avec un foyer ;
un détecteur à rayons X et un manipulateur déplaçant l'élément de test à l'intérieur du système de tomographie à rayons X ;

le manipulateur suivant une trajectoire paramétrable prédéfinissable pour générer des clichés de l'élément de test dans différentes positions et prenant les clichés dans les positions déclenchées ;

la position du manipulateur étant définie pour chaque cliché et la géométrie de projection associée respective étant calculée par déduction ;

une valeur d'une fonction de qualité étant ensuite calculée pour cette trajectoire et une trajectoire supplémentaire étant ensuite exécutée avec des paramètres différents de la trajectoire précédente ;

pendant que cette trajectoire est exécutée, des clichés supplémentaires de l'élément de test étant générés au niveau des positions déclenchées et la valeur de la fonction de qualité étant calculée à cet effet ;

la dernière étape mentionnée étant répétée ;

la trajectoire étant calculée itérativement à l'aide d'un algorithme d'optimisation pour lequel la valeur de la fonction de qualité est minimale ;

des clichés d'éléments de test supplémentaires identiques audit élément de test étant pris le long de la trajectoire dans laquelle le minimum de la fonction de qualité avait été précédemment constaté ;

et pour chaque élément de test, une reconstruction de tomographie étant réalisée à l'aide d'un algorithme adapté à l'aide de l'association des clichés individuels pour former la géométrie de projection respective.

2. Procédé selon la revendication 1, la détermination de la position du manipulateur étant effectuée à l'aide de marqueurs disposés fixement sur place par rapport à l'élément de test pendant la mise en oeuvre du procédé de tomographie à rayons X.

3. Procédé selon l'une quelconque des revendications précédentes, le manipulateur étant un robot industriel à six axes.

4. Procédé selon l'une quelconque des revendications précédentes, la fonction de qualité suivante étant utilisée :

$$F = \sqrt{\alpha(1 - \frac{Q_{min}}{Q_{opt}})^2 + \beta(1 - \frac{Q_{min}}{Q_{opt}})^2(1 - \frac{\sigma}{\sigma_{opt}})^2 + \gamma(1 - \frac{E}{E_{opt}})^2} \stackrel{!}{=} min$$

les facteurs de pondération $\alpha$, $\beta$ et $\gamma$ servant pour les priorités des dimensions $Q_{min}$, $\sigma$ et E, $Q_{min}$ étant le quantile minimal de tous les clichés d'une série, $Q_{opt}$ étant la valeur optimale du quantile, $\sigma$ étant la dispersion des quantiles en un quantile minimal, $\sigma_{opt}$ étant la valeur optimale de la dispersion, E étant l'entropie et $E_{opt}$ étant la valeur optimale de l'entropie.

5. Procédé selon l'une quelconque des revendications précédentes, l'algorithme d'optimisation étant un algorithme de descente du simplexe.

6. Procédé selon l'une quelconque des revendications précédentes, les éléments individuels ou en combinaison quelconque suivants pouvant être compris dans une fonction de qualité supplémentaire pour la sélection de la trajectoire prédéfinissable : longueur de trajet, agrandissement, encombrement, complexité, caractéristiques de fonctionnement du robot industriel, possibilités d'évolution, optimisation, redondance.

7. Procédé selon l'une quelconque des revendications précédentes, le procédé étant interrompu après un nombre maximum prédéfinissable d'étapes d'itération et le procédé de contrôle des éléments de test supplémentaires étant mis en oeuvre avec la trajectoire de la dernière étape d'itération.

8. Procédé selon l'une quelconque des revendications précédentes, l'optimisation étant réalisée à l'aide d'un renversement de l'élément de test.

Fig. 1

Fig. 2

Fig. 3

0                                                                    16383

Fig. 4

Fig. 5

Fig. 6

Projektionspunkt

## Fig. 7

## Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ANDREAS FISCHER et al.** CT Rekonstruktion mit Objektspezifischen Erweiterten Trajektorien. *DACH-Jahrestagung 2015,* 10. Mai 2015, http://www.ndt.net/?id=18982